# EUROPEAN PATENT APPLICATION

(11) **EP 4 712 002 A1**
(43) Date of publication of application: **18.03.2026**
(21) Application number: 24199730.3
(22) Date of filing: 11.09.2024
(51) Int. Cl.: G06Q 30/0207, G06Q 30/0234, G07F 17/32

(54) **GAME WIN/LOSS-LINKED REWARD TOKEN PROCESSING SYSTEM FOR BUYERS**

(71) Applicant: Nam, Ki-won, Seoul 06159 (KR)
(72) Inventor: Nam, Ki-won, Seoul 06159 (KR)
(74) Representative: Botti & Ferrari S.p.A.

(57) **Abstract**

The present invention provides a system for processing a reward token in conjunction with win/loss of a game for buyers, in which a challenge token that allows consumers to participate in a game capable of receiving a discount on a product price is provided by a seller to a consumer who has purchased a product, and the consumer may play a game for the discount on a challenge product of the seller who is a target of a new product purchase with the challenge token to receive the discount on the product price upon success, whereas if the consumer fails to receive the price discount as a result of participating in the game, an additional save token as much as the amount of all or a predetermined ratio of a challenge face token value is paid to the consumer so as to use it only for purchasing the product, and token issuance costs shared by the seller vary depending on the win/loss of the game played by the consumer.

## Description

### [BACKGROUND OF THE INVENTION]

### 1. Field of the Invention

The present invention relates to a game win/loss-linked reward token processing system for buyers, and more specifically, to a system for processing a reward token in conjunction with win/loss of a game for buyers, in which a challenge token that allows consumers to participate in a game capable of receiving a discount on a product price is provided by a seller to a consumer who has purchased a product, and the consumer may play a game for the discount on a challenge product of the seller who is a target of a new product purchase with the challenge token to receive the discount on the product price upon success, whereas if the consumer fails to receive the price discount as a result of participating in the game, an additional save token as much as the amount of all or a predetermined ratio of a challenge face token value is paid to the consumer so as to use it only for purchasing the product, and token issuance costs shared by the seller vary depending on the win/loss of the game played by the consumer.

### 2. Description of the Related Art

As well known in the art, in accordance with recent development of information communication technology, a technology for information service that provides information on various fields by wide area data communication network in real time to multiple subscribers through at least one host server has been actively developed.

Based on the technology, recently, a peripheral technology such as a cache memory expansion technology for more rapidly providing accurate information to a subscriber, and an information sorting and compression technology for more conveniently accessing taste and preference of the subscriber have been developed. Accordingly, development of various contents and solutions therethrough is also accelerated.

A capitalist society has a structure in which manufacturing, sale, consumption and marketing activities of products are organically linked to form a cycle, and added values are created at the respective points in the cycle.

Elements of marketing to promote the consumption are positioned between the sale and the consumption. For marketing, there are cases of providing a discount immediately when purchasing a product, giving an additional gift when purchasing a product, or also giving a benefit when pre-booking future consumption.

Meanwhile, various digital currencies have been released one after another recently to improve convenience in these consumption activities. The digital currencies have advantages of being more portable than existing currencies, and allowing users to exchange them into various currencies easily and quickly.

However, the existing digital currencies have no features other than simply replacing the existing traditional monetary measures by digitizing them. Therefore, there is no motivation to stimulate consumption or increase users' desire to consume.

Therefore, the applicant of the present invention has developed a system for managing coins in conjunction with purchase and has been granted a patent registration (Korean Patent Registration No. 10-2057513). In this system, a coin that enables consumers to participate in a price discount bargaining game is provided by a seller to a consumer who has purchased a product in return therefor, and if the consumer fails to negotiate the price as a result of participating in the bargaining game with the coin, a bargaining failure coin that allows consumers to purchase products of alliance members is provided to the consumer, thereby increasing sales through the price bargaining function in addition to the value of traditional currency, and managing the issuance limit of the bargaining coin and the bargaining failure coin in conjunction with each other so as to maintain a balance of increase in sales within the alliance member group.

In fact, it is possible to increase the sales of the alliance member group by utilizing reward coins provided to the consumer when purchasing a product through the system disclosed in the above registered patent, but this prior art has the following problem.

In the conventional system to which the above registered patent is applied, the reward coin provided to the consumer when purchasing a product is issued by a store where the consumer purchased a product, and it is extremely rare for the consumer to immediately and repeatedly purchase the product. Therefore, it does not lead to quick purchase activity, and this problem is recognized as the same problem for the challenge product of a game that aims to purchase the product at a discount.

### [SUMMARY OF THE INVENTION]

In consideration of the above-described circumstances, it is an object of the present invention to provide a system for processing a reward token in conjunction with win/loss of a game for buyers, in which a bargaining token that enables consumers to participate in a price discount bargaining game is provided by a seller to a consumer who has purchased a product in return therefor, and the consumer plays the discount bargaining game for a challenge product of the seller who is a target of a new product purchase with the bargaining token so that the product price bargaining can be processed, then if the consumer fails to negotiate the price as a result of participating in the bargaining game with the coin, an additional purchase token as much as the amount of all or a predetermined ratio of a challenge face token value is paid to the consumer so as to use it for purchasing the product in a limited manner, and token issuance costs shared by the seller vary depending on the win/loss of the game played by the consumer.

To achieve the above object, according to an aspect of the present invention, there is provided a system for processing a reward token in conjunction with win/loss of a game for buyers, the system comprising a reward token management server 10 which includes: a game management unit 18 configured to manage a plurality of games which allow a consumer to participate in price bargaining of a selling product of a seller, and negotiate the price of the selling product depending on the win/loss of the game; a token issuance information management unit 20 configured to process so that the seller can issue a token capable of participating in a bargaining game and provide it to a consumer who has purchased a product, and manage information on the issued token; and a token resource calculation processing unit 34 configured to perform calculation processing so that an amount of financial resource burden by the seller who has issued the token when selling the product varies depending on the win/loss of the game played by the consumer.

Preferably, the reward token management server 10 includes a token-specific seller linkage information management unit 28 configured to manage history information on the product sales of the seller and token issuance in order to perform information processing due to differences between a time when the seller sales the product, a time when the consumer plays the game, and a time of performing a calculation between the seller and the operator.

Preferably, the token issued by the token issuance information management unit 20 includes: a challenge token which is provided by the seller to the consumer when purchasing a product, and allows the consumer to participation in a game for negotiating the price when purchasing the product later; and a save token which is assigned to a consumer who fails the game, has the same face value as a face value of the challenge token paid when participating in the game, and allows the consumer to use it only when purchasing a product.

Preferably, the reward token management server 10 includes a consumer token amount management unit 24 configured to manage an increased amount of the token of the consumer when he or she succeeds in the game using a challenge token, and manage amounts of purchase tokens provided by the seller when the consumer fails in the game by type of the tokens.

Preferably, the reward token management server 10 includes a token usage information processing unit 26 configured to manage token usage information of the consumer so that when he or she succeeds in the game using a challenge token, the consumer can use the token as much as the increased amount to purchase products within a seller pool, and when the consumer fails in the game, he or she can use the save token provided by the seller to purchase the products.

Preferably, the token issuance information management unit 20 converts a challenge token held by the consumer into a save token when the consumer attempts to purchase a product.

Preferably, the reward token management server 10 includes an allowable save token use value update processing unit 36 configured to cumulatively update allowable values for use of the save tokens of the seller as much as the amount paid when the seller pays the save token to the consumer who has failed in the game using a challenge token.

Preferably, the allowable save token use value update processing unit 36 manages so that a transaction is made only when a cumulative amount of the allowable values for use of the save tokens of a purchase target seller from which any one consumer wishes to purchase is greater than the amount of the save token to be used by the consumer.

Preferably, if the seller requests an increase in the allowable value for use of the save token of the seller when the consumer attempts to purchase a product using the save token to the reward token management server 10 through the allowable save token use value update processing unit 36, the reward token management server 10 increases the allowable value for use of a purchase token, that is, the save token as much as a charging amount of the seller.

Preferably, the token resource calculation processing unit 34 performs calculation and payment processing of a challenge token issued to the consumer in return for selling the products and the save token paid to the consumer when he or she fails in a game challenge using the challenge token.

Preferably, the token resource calculation processing unit 34 performs calculation processing so that, when the consumer requests to purchase a product after successfully completing a game challenge using the challenge token, the seller who has issued the challenge token does not issue an additional save token.

Preferably, the token resource calculation processing unit 34 is configured so that an amount of a challenge token paid to the consumer to participate in a game when selling a product, and an amount of the save token that can be received when the consumer fails to increase the token through a bargaining game after the challenge to a specific challenging seller are equally calculated.

Preferably, the token resource calculation processing unit 34 calculates so that a product seller who has issued a challenge token pays both of an amount of the challenge token paid to a user to participate in a game when selling a product, and an amount of the save token that can be received when the consumer fails to increase the token through the game after the challenge to a specific challenging seller.

Preferably, the token resource calculation processing unit 34 is configured to calculate so that a product seller and a challenging seller who is a challenge target of the consumer share and pay both of an amount of the challenge token paid to the consumer to participate in a game when selling a product, and an amount of the save token that can be received when the consumer fails to increase the token through the game after the challenge to a specific challenging seller in a predetermined ratio.

Preferably, the token resource calculation processing unit 34 processes so as to refund a predetermined ratio of the increased amount of the token to the seller who has issued the challenge token when the consumer succeeds to increase the token through the game.

Preferably, the game management unit 18 calculates information on target products that can be challenged by the game for each seller, and game probability information computed based on an amount of a challenge token of the consumer compared to an amount of a challenge product, and displays them in a readable state.

Preferably, the token usage information processing unit 26 divides the challenge token held by the consumer who has acquired the challenge token into a plurality of units, then manages information on the number of the divided units of the challenge token so as to use them in the game, and manages the save tokens acquired from each seller so that the consumer can integrate them at will.

Preferably, the reward token management server 10 includes a seller information management unit 14 configured to register and manage product information sold by each seller and token information paid to the consumer upon purchase for each product, and sort the products in an order of the largest amount of tokens paid for each product.

Preferably, the reward token management server 10 further includes: a consumer information management unit 16 configured to manage consumer personal information; and a consumer game history management unit 22 configured to manage a bargaining game challenge history of each consumer.

Preferably, the system according further includes: a consumer terminal 2 equipped with a reward information output application 4 which allows the consumer to read information on challenge tokens to be issued upon purchase for each seller registered in the reward token management server 10, information on save tokens to be paid secondarily when the consumer fails to increase the token through the game, and information on accumulated allowable values for use of save tokens of a seller who is a target of bargaining challenge to determine whether a product can be purchased; and seller terminals S1 to Sn and D1 to Dn configured to issue challenge tokens when the consumer purchases a product in conjunction with the reward token management server 10, and then pay the save token to the consumer when he or she fails in challenge to purchase a specific product; and a shopping mall server 6 configured to receive a product purchase signal of a specific user from the reward token management server 10, the seller terminals S1 to Sn and D1 to Dn, or the consumer terminal 2 and perform payment processing.

Preferably, tokens 40 include: token face value information 42 which is issued by a seller in return for purchasing a product, or can be used only to purchase a product as much as the face value due to failure of bargaining; and issuer product image information 44, wherein the issuer product image information 44 is minted as non-fungible tokens (NFTs) along with an issuance time.

Preferably, the reward token management server 10 includes a token image management unit 30 configured to manage an issuer product (a painting image or a photo image) image information 44 included in the token 40 to remain in the possession of the consumer even if the consumer uses face value information assigned to the token.

Preferably, the reward token management server 10 further includes a token image data transaction processing unit 32 configured to trade the issuer product image 44, the painting image or the photo image included in the token 40.

The system for processing a reward token in conjunction with win/loss of a game for buyers according to the present invention allows each seller to issue challenge tokens that enable consumers to receive a discount on the product price through a game as a reward for purchasing a product, thereby activating product sales, and users may purchase products at a lower price by increasing the amount of the challenge token through the game, such that a lot of fun in the game can be obtained in addition to the fun of purchasing. In addition, if the consumer loses in the game, he or she may receive an additional save token of the same amount as the challenge token, and for the sellers who have issued the save tokens, allowable values for use of the save tokens that allow the consumer to use them for purchasing products of the sellers are displayed separately for each seller, such that the consumer can easily purchase the products of the sellers, and thereby leading the virtuous circulation in a way that token issuance and sales amount are proportional to each other, and as a result, the sales will be activated.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic diagram illustrating the general configuration of a system for processing a reward token in conjunction with win/loss of a game for buyers ("a game win/loss-linked reward token processing system for buyers") according to an embodiment of the present invention;
FIG. 2 is a diagram illustrating flow of data upon success of a bargaining game through the game win/loss-linked reward token processing system for buyers according to an embodiment of the present invention;
FIG. 3 is a diagram illustrating flow of data upon failure of the bargaining game through the game win/loss-linked reward token processing system for buyers according to an embodiment of the present invention;
FIG. 4 is a diagram illustrating the configuration of tokens distributed through the game win/loss-linked reward token processing system for buyers according to an embodiment of the present invention; and
FIG. 5 is a block diagram illustrating the configuration of a reward token management server included the game win/loss-linked reward token processing system for buyers according to an embodiment of the present invention.

### [DETAILED DESCRIPTION OF THE INVENTION]

Hereinafter, the present invention will be described in detail with reference to the accompanying drawings.

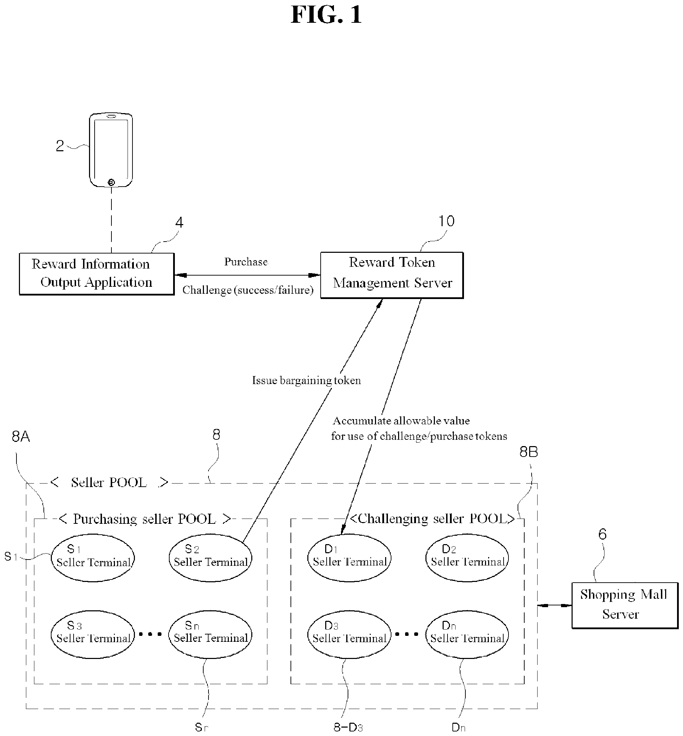

FIG. 1 is a schematic diagram illustrating the general configuration of a game win/loss-linked reward token processing system for buyers according to an embodiment of the present invention.

Referring to FIG. 1, the game win/loss-linked reward token processing system for buyers according to an embodiment of the present invention is a system in which a challenge token that allows consumers to participate in a game capable of receiving a discount on a product price is provided by a seller to a consumer who has purchased a product, and the consumer may play a game for the discount on a challenge product of the seller who is a target of a new product purchase with the challenge token to receive the discount on the product price upon success, whereas if the consumer fails to receive the price discount as a result of participating in the game, an additional save token as much as the amount of all or a predetermined ratio of a challenge face token value is paid to the consumer so as to use it only for purchasing the product, and token issuance costs shared by the seller vary depending on the win/loss of the game played by the consumer.

More specifically, the game win/loss-linked reward token processing system for buyers according to an embodiment of the present invention is a system which is capable of: issuing reward tokens provided by sellers of products to consumers as a condition of purchasing products so that the consumers can participate in a game in which they may receive a discount on the selling price for products sold by a plurality of sellers registered in a seller POOL; participating in the game in which the selling price can be negotiated using the reward tokens; and readjusting the final selling price according to results of the game.

The reward token collectively refers to a challenge token and a save token, and the save token is a token that can receive only when the user fails in the game.

In this case, as a financial resource of the game operated in the game win/loss-linked reward token processing system for buyers according to an embodiment of the present invention, resources provided by a plurality of sellers who pay rewards to the consumers in return for purchasing products thereof are collected and used. The sellers who have agreed to pay for the reward amount are registered in a seller POOL 8.

The seller POOL 8 is divided into a purchasing seller POOL 8A and a challenging seller POOL 8B which are distinguished in the consumer place. The purchasing seller POOL 8A includes seller terminals S1 to Sn configured to issue bargaining tokens when a consumer purchases a product in conjunction with a reward token management server 10, and then pay purchase tokens to the consumer when he or she fails in the bargaining challenge to purchase a specific product. The challenging seller POOL 8B includes seller terminals D1 to Dn configured to give a challenge by the consumer to purchase the specific product through a bargaining game.

In addition, the game win/loss-linked reward token processing system for buyers according to an embodiment of the present invention includes a consumer terminal 2 equipped with a reward information output application 4 which allows the consumer to read information on bargaining tokens to be issued upon purchase for each seller registered in the reward token management server 10, information on purchase tokens to be paid secondarily upon failure of bargaining through the game, and information on accumulated allowable values for use of purchase tokens of a seller who is a target of bargaining challenge to determine whether a product can be purchased; and a shopping mall server 6 configured to receive a product purchase signal of a specific user from the reward token management server 10, the seller terminals S1 to Sn and D1 to Dn, or the consumer terminal 2 and perform payment processing.

Meanwhile, the game win/loss-linked reward token processing system for buyers according to an embodiment of the present invention includes the reward token management server 10 configured to: manage a plurality of bargaining games which allow a consumer to participate in price bargaining of a selling product of a seller, and negotiate the price of the selling product depending on the win/loss of the game; process so that the seller can issue a token capable of participating in a bargaining game and provide it to a consumer who has purchased a product; manage information on the issued tokens; and perform calculation processing so that an amount of financial resource burden by the seller who has issued the token when selling the product varies depending on the win/loss of the game played by the consumer.

The game win/loss-linked reward token processing system for buyers according to an embodiment of the present invention provides a predetermined reward token in return for purchasing a product of specific allied sellers. Then, the user can participate in a game using the reward token, and when participating in the game, the user may specify a product to purchase, or may specify a specific allied seller who sells the product and then participate in the game, or may also set a desired product price without specifying a product and then participate in the game.

The reward token includes: a challenge token which is provided to the consumer by the seller when purchasing a product, and allows the consumer to participate in a game for receiving a discount on the price of the product when purchasing a product later; and a save token which is assigned to a consumer who fails the game, has the same face value as a face value of the challenge token paid when participating in the game, and allows the consumer to use it only when purchasing a product.

At this time, the reward token management server 10 converts the challenge token held by the consumer into a save token when the consumer attempts to purchase a product.

In addition, the reward token management server 10 divides the challenge token held by the consumer who has acquired the challenge token into a plurality of units, then manages information on the number of the divided units of the challenge token so as to use them in the game, and manages the save tokens acquired from each seller so that the consumer can integrate them at will.

Accordingly, the consumer may integrate a plurality of challenge tokens acquired by purchasing different products from different sellers for each face value to challenge the game, and a single challenge token may also be divided into a plurality of face value units and used individually. In addition, the consumer may also integrate and use the save tokens acquired from each seller at will.

Further, in the game win/loss-linked reward token processing system for buyers according to an embodiment of the present invention, when a consumer who has purchased a product fails to receive a discount on the product price as a result of playing the game, it is the case where increase in the challenge token through the game fails. At this time, the system provides information on the save tokens that the consumer in this case can receive by storing them for each seller in a database so that the consumer can read, as well as information on allowable value for use of the save tokens of a seller who is the challenge so that the consumer can read, and when a signal for purchasing a product is input after failure of the game, performs calculation for save token issuance between an operator and the seller.

At this time, the allowable value for use of the save token motivates consumers who have acquired the save tokens by purchasing other products to purchase products of sellers who have not issued save tokens to the consumers using the save tokens held by them. As a result, when issuing more save tokens, it severs to promote the sales of the product of the sellers as much as the issued amount.

Preferably, the reward token management server 10 cumulatively updates the allowable values for use of the save tokens of the seller as much as the amount paid when the seller pays the save token to the consumer who has failed in the game using the challenge token.

At this time, in the case of the allowable value for use of the save token, a transaction may be made only when a cumulative amount of the allowable values for use of the save tokens of a purchase target seller from which any one consumer wishes to purchase is greater than the amount of the save token to be used by the consumer.

Meanwhile, the reward token management server 10 manages history information on the product sales of the seller and token issuance in order to perform information processing due to differences between a time when the seller sales the product, a time when the consumer plays the game, and a time of performing a calculation between the seller and the operator. Managing the token issuance information of the seller, the product sales information and information on the consumer who has received the token in conjunction with each other is performed for management of a token amount increased upon the success or failure in the game of the consumer in the future, and calculation of costs due to the increase or issuance of the token.

In addition, the reward token management server 10 manages token usage information of the consumer so that when the consumer succeeds in the game using the challenge token, he or she can use the token as much as the increased amount to purchase products within the seller pool, and when the consumer fails in the game, he or she can use the save token provided by the seller to purchase the products.

Meanwhile, in the game win/loss-linked reward token processing system for buyers according to an embodiment of the present invention, when selling a product, the seller issues a challenge token to a consumer who has purchased the product, and if the consumer participates in the game using the challenge token and fails, the same seller issues a save token that can be used to purchase the product to the consumer. Therefore, the seller should share the same save token issuance amount as the challenge token issuance amount.

However, calculation processing is performed so that, when the consumer requests to purchase a product after successfully completing a game challenge using the challenge token, the seller who has issued the challenge token does not issue an additional save token. Therefore, a promotional amount that the seller should share varies depending on the win/loss of the game played by the consumer.

In addition, the reward token management server 10 calculates information on target products that can be challenged by the game for each seller, and game probability information computed based on the amount of the challenge token of the consumer compared to the amount of the challenge product, and displays them in a readable state.

Further, the reward token management server 10 registers and manages product information sold by each seller and token information paid to the consumer upon purchase for each product, and sorts the products in an order of the largest amount of tokens paid for each product.

In addition, the game win/loss-linked reward token processing system for buyers according to an embodiment of the present invention includes the consumer terminal 2 equipped with the reward information output application 4 which allows the consumer to read information on the game reward token to be issued upon purchase for each seller registered in the reward token management server 10, token information to be paid secondarily when an increase in discount through the game fails, and information on accumulated discount acceptance token amount of the seller who is the challenge target to determine whether a product can be purchased.

In addition, the game win/loss-linked reward token processing system for buyers according to an embodiment of the present invention includes: allied seller servers 8a to 8n configured to issue a reward token when a user purchases a product in conjunction with the reward token management server 10, and pay an additional reward token amount to the challenging seller when the user fails to challenge for a purchase discount on a specific product; and a shopping mall server 6 configured to receive a product purchase signal of a specific user from the reward token management server 10, the allied seller servers 8a to 8n, or the consumer terminal 2 and perform payment processing.

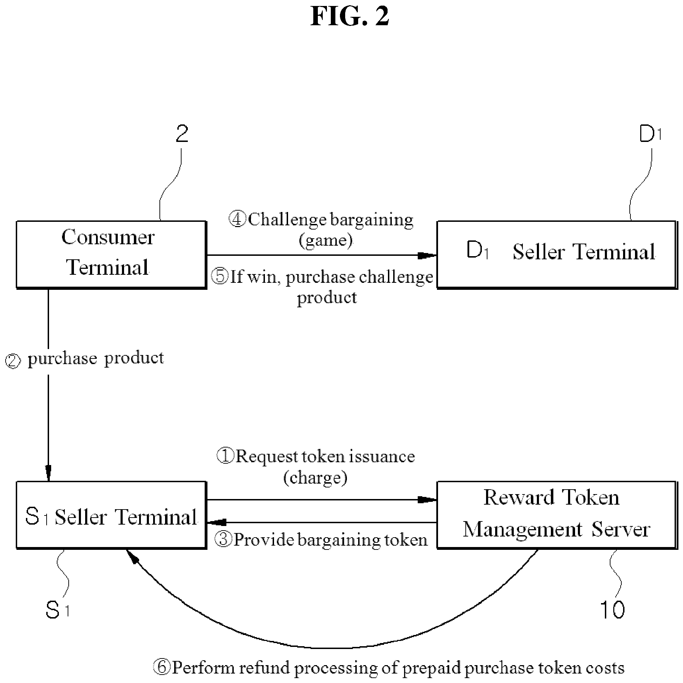

FIG. 2 is a diagram illustrating flow of data upon success of a bargaining game through the game win/loss-linked reward token processing system for buyers according to an embodiment of the present invention.

Referring to FIG. 2, through the game win/loss-linked reward token processing system for buyers according to an embodiment of the present invention, sellers, that is, purchasing sellers of the seller terminals S1 to Sn and challenging sellers of the seller terminals D1 to Dn belonging to seller POOL 8, request the reward token management server 10 to act as an agent for token issuance, and precharge token issuance costs.

At this time, when the consumer purchases a product from any one seller among the purchasing sellers of the seller terminals S1 to Sn and the challenging sellers of the seller terminals D1 to Dn, the seller becomes the purchasing seller of the seller terminals S1 to Sn, and when the consumer gives a challenge for the seller of the product wished to purchase by him or her using the challenge token to increase the discount of the product price, the seller becomes the challenging seller of the seller terminals D1 to Dn. Therefore, the seller may become either the purchasing seller of the seller terminals S1 to Sn or the challenging seller of the seller terminals D1 to Dn depending on the purchase or challenge of the consumer.

Each seller registers information on the products sold, information on the tokens paid to the consumers upon purchase of each product, and information on the amount of tokens in the reward token management server 10. The reward token management server 10 manages the information registered by the seller and sorts the products in an order of the largest amount of tokens paid for each product.

Accordingly, the consumers may check the product information of the sellers provided by the reward token management server 10, and check the amounts of the challenge tokens and save tokens that the consumers can obtain when purchasing the products.

For example, if any one seller provides 500 challenge tokens worth 500 won per product price 10,000 won to the consumer when selling a product, as a result, the seller will provide a 5% promotion as a reward when selling the product. Assuming that, if the consumer fails the game later on, the seller additionally pays the same amount of the save token as the challenge token paid, the allied seller will pay a total of 10% promotion.

Preferably, in the game win/loss-linked reward token processing system for buyers according to an embodiment of the present invention, at a point in time when the seller sells a product and pays a challenge token, the reward token management server 10 subtracts the amount of save token to be paid to the seller when the consumer fails the game from the precharged amount.

As described above, when a consumer reads the product information of any one seller and information on the challenge tokens and save tokens that can be acquired upon purchasing a product, and then in this state, purchases the product of the seller, the reward token management server 10 pays the challenge tokens to the consumer as much as the preset amount on behalf of the seller.

Then, the consumer may participate in the bargaining game using the challenge token, and when participating in the game, he or she may specify the product to be purchased, or a specific seller who sells the product, and then participate in the game, but specifying the challenge product or seller is not a prerequisite.

In the present invention, the consumer may also participate in the bargaining game by setting a specific challenge price in advance. However, the consumer should pay the challenge token to challenge a game through the reward token management server 10 and participate in the game.

When the consumer inputs an amount of the challenge token to challenge the game and sets the challenge price, a winning probability of the game is determined. Thereafter, when the consumer inputs the amount of the challenge token to challenge the game while specifying a specific product and also inputs a challenge probability, the amount of the challenge token that the consumer can acquire when successfully completing the challenge is determined.

In this case, the consumer who has acquired the challenge token divides the challenge token held by him or her into a plurality of units and then may use them in the game. To this end, the reward token management server 10 manages information on the number of challenge tokens divided into each unit for each consumer, and in the case of the save tokens, manages so that the consumer integrates and uses them.

In the game win/loss-linked reward token processing system for buyers according to an embodiment of the present invention, when the consumer succeeds in the game, the consumer may stop the game and use the challenge token increased due to the success of the game to purchase a product from the seller who is the target of the challenge. To this end, the reward token management server 10 may convert the increased challenge token of the consumer into a save token by the request of the consumer.

At the same time, the reward token management server 10 processes so as to refund a predetermined ratio of the increased amount of the token to the seller who has issued the challenge token when the consumer succeeds to increase the token through the game. Preferably, the ratio is set to 20% and paid, and similarly, when the consumer additionally plays the game and repeatedly succeeds in the game, the predetermined ratio of the total increased amount is also paid to the seller who has issued the challenge token.

To this end, the reward token management server 10 manages the seller information, the challenge token information issued by the seller, and the consumer information in conjunction with each other. Accordingly, when each consumer increases the challenge token by succeeding in the game, the predetermined ratio of the increased amount of the token may be paid to the seller.

Meanwhile, when the consumer who has succeeded in the game stops playing the game to purchase a product, the purchase token issuance amount that has been subjected to prepayment processing by the reward token management server 10 from the seller in advance in order to pay it to the consumer upon failure of the game is refunded to the seller again.

That is, in the game win/loss-linked reward token processing system for buyers according to an embodiment of the present invention, a difference in promotional costs (token issuance amounts) paid by the seller who has sold the product occurs depending on the win/loss of the game played by the consumer.

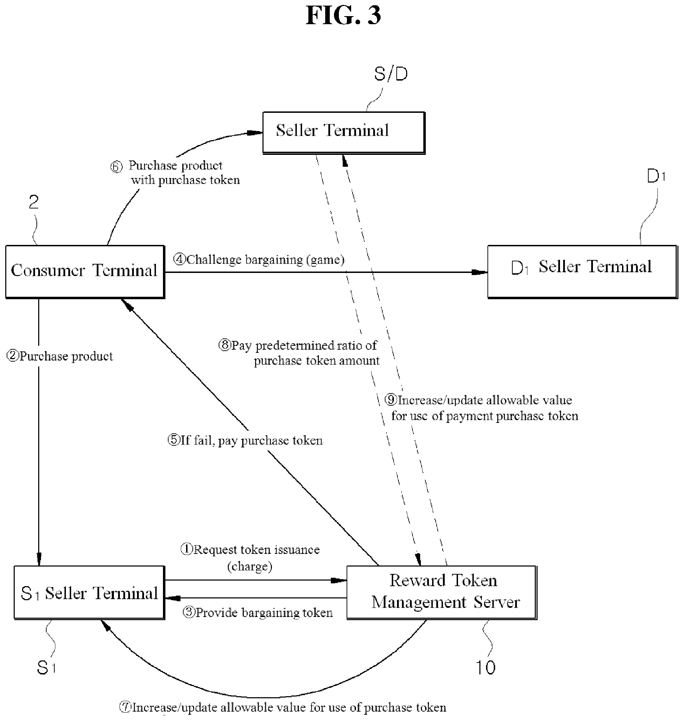

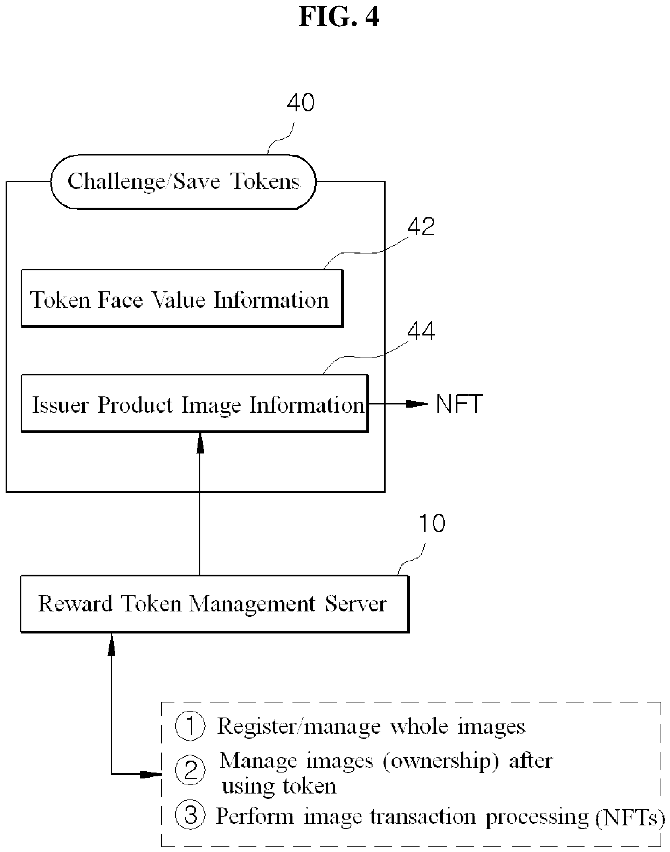

FIG. 3 is a diagram illustrating flow of data upon failure of the bargaining game through the game win/loss-linked reward token processing system for buyers according to an embodiment of the present invention, and FIG. 4 is a diagram illustrating the configuration of tokens distributed through the game win/loss-linked reward token processing system for buyers according to an embodiment of the present invention

Referring to FIG. 3, it shows the flow of data when the consumer fails in the game, and the process of receiving the challenge token by the consumer through purchasing a product is the same as the process shown in FIG. 2.

In other words, through the game win/loss-linked reward token processing system for buyers according to an embodiment of the present invention, the sellers, that is, the purchasing sellers of the seller terminals S1 to Sn and the challenging sellers of the seller terminals D1 to Dn belonging to seller POOL 8, request the reward token management server 10 to act as an agent for token issuance, and precharge the token issuance costs.

Each seller registers information on the products sold, information on the tokens paid to the consumers upon purchase of each product, and information on the amount of tokens in the reward token management server 10. The reward token management server 10 manages the information registered by the seller and sorts the products in an order of the largest amount of tokens paid for each product.

Accordingly, the consumers may check the product information of the sellers provided by the reward token management server 10, and check the amounts of the challenge tokens and save tokens that the consumers can obtain when purchasing the products.

Therefore, when a consumer reads the product information of any one seller and reads information on the challenge tokens and save tokens that can be acquired upon purchasing a product, and then in this state, purchases the product of the seller, the reward token management server 10 pays the challenge tokens to the consumer as much as the preset amount on behalf of the seller.

Then, the consumer may participate in the game using the challenge token, and when participating in the game, he or she may specify the product to be purchased, or a specific seller who sells the product, and then participate in the game, but specifying the challenge product or seller is not a prerequisite.

In the present invention, the consumer may also participate in the game by setting a specific challenge price in advance. However, the consumer should pay the challenge token to challenge a game through the reward token management server 10 and participate in the game.

When the consumer inputs an amount of the challenge token to challenge the game and sets the challenge price, a winning probability of the game is determined. Thereafter, when the consumer inputs the amount of the challenge token to challenge the game while specifying a specific product and also inputs a challenge probability, the amount of the challenge token that the consumer can acquire when successfully completing the challenge is determined.

In this case, the consumer who has acquired the challenge token divides the challenge token held by him or her into a plurality of units and then may use them in the game. To this end, the reward token management server 10 manages information on the number of challenge tokens divided into each unit for each consumer, and in the case of the save tokens, manages so that the consumer integrates and uses them.

In the game win/loss-linked reward token processing system for buyers according to an embodiment of the present invention, when the consumer fails in the game, the reward token management server 10 provides the consumer with a save token additionally issued by the seller who has issued the challenge token.

As described above, the save token is a token that can only be used to purchase products and cannot be used for any other purposes.

At this time, if the seller pays a save token to a consumer who fails to receive a discount on the selling price as a result of challenging the game using the challenge token, the reward token management server 10 cumulatively updates the allowable values for use of the save tokens of the seller as much as the amount paid.

At this time, in the case of the allowable value for use of the save token, a transaction may be made only when a cumulative amount of the allowable values for use of the save tokens of a purchase target seller from which any one consumer wishes to purchase is greater than the amount of the save token to be used by the consumer.

Therefore, the allowable value for use of the save token motivates consumers who have acquired the save tokens by purchasing other products to purchase products of sellers who have not issued save tokens to the consumers using the save tokens held by them. As a result, when issuing more save tokens, it severs to promote the sales of the product of the sellers as much as the issued amount.

In addition, the allowable values for use of the save tokens are different for each seller. Therefore, even if the consumer wants to purchase a product from a specific seller, when the number of the save tokens of the consumer is 20,000 tokens, but the allowable values for use of the save tokens of the seller is 15,000 tokens, the consumer will not be able to use whole 20,000 save tokens.

Meanwhile, the consumer may integrate and use the save tokens acquired from different sellers.

In addition, preferably, the reward token management server 10 is configured in a way that, when any one seller requests an increase in the allowable value for use of the purchase token of the seller to the reward token management server 10, the reward token management server 10 may increase the allowable value for use of the save token as much as a charging amount of the seller.

Meanwhile, the reward token management server 10 processes so that an amount of the challenge token paid to the consumer to participate in a game when selling a product, and an amount of the save token that can be received when the consumer fails to increase the token through the game after the challenge to a specific challenging seller are equally calculated.

In addition, the reward token management server 10 may calculate so that the product seller who has issued the challenge token pays both of the amount of the challenge token paid to the user to participate in a game when selling a product, and the amount of the save token that can be received when the consumer fails to increase the token through the game after the challenge to a specific challenging seller.

On the other hand, the reward token management server 10 may calculate so that the product seller and the challenging seller who is the challenge target of the consumer share and pay both of the amount of the challenge token paid to the consumer to participate in a game when selling a product, and the amount of the purchase token that can be received when the consumer fails to increase the token through the game after the challenge to a specific challenging seller in a predetermined ratio.

Referring to FIG. 4, challenge/save tokens 40 include: token face value information 42 issued by a seller in return for purchasing a product; and issuer product image information 44.

At this time, the issuer product image information 44 may be replaced with a famous painting image or a photo image.

Meanwhile, the issuer product image information 44 is minted as non-fungible tokens (NFTs) along with an issuance time, which is a token additionally paid to a user who fails to negotiate, and can only be used to purchase products of the challenging sellers. This information is managed by the reward token management server 10.

In more detail, the reward token management server 10 registers and manages the product images (famous painting images or photo images) of the entire issuer, performs image management, that is, ownership management after using the token, and registers and processes them as NFTs so as to trade only the product images.

The reward token management server 10 includes a token image management unit 30 configured to manage an issuer product (a painting image or a photo image) image information 44 included in the token 40 to remain in the possession of the consumer even if the consumer uses face value information assigned to the token.

The reward token management server 10 further includes a token image data transaction processing unit 32 configured to trade the issuer product image 44, the painting image or the photo image included in the token 40.

In particular, when the product images are issued by limiting to a predetermined number at the time of issuing the reward tokens, their value will be increased even more.

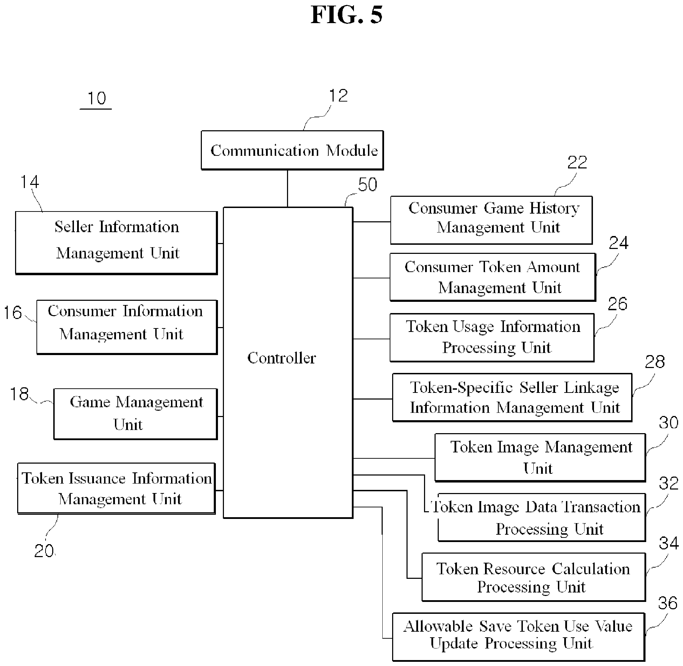

FIG. 5 is a block diagram illustrating the configuration of a reward token management server included the game win/loss-linked reward token processing system for buyers according to an embodiment of the present invention.

Referring to FIG. 5, the game win/loss-linked reward token processing system for buyers according to an embodiment of the present invention includes the reward token management server 10 which includes: a game management unit 18 configured to manage a plurality of games which allow a consumer to participate in price bargaining of a selling product of a seller, and negotiate the price of the selling product depending on the win/loss of the game; a token issuance information management unit 20 configured to process so that the seller can issue a token capable of participating in a bargaining game and provide it to a consumer who has purchased a product, and manage information on the issued token; and a token resource calculation processing unit 34 configured to perform calculation processing so that an amount of financial resource burden by the seller who has issued the token when selling the product varies depending on the win/loss of the game played by the consumer.

In addition, the reward token management server 10 includes a token-specific seller linkage information management unit 28 configured to manage history information on the product sales of the seller and token issuance in order to perform information processing due to differences between a time when the seller sales the product, a time when the consumer plays the game, and a time of performing a calculation between the seller and the operator.

In addition, the reward token management server 10 includes a consumer token amount management unit 24 configured to manage an increased amount of the token of the consumer when he or she succeeds in the game using the challenge token, and manage amounts of purchase tokens provided by the seller when the consumer fails in the game by type of the tokens.

The reward token management server 10 further includes a token usage information processing unit 26 configured to manage token usage information of the consumer so that when the consumer succeeds in the game using the challenge token, he or she can use the token as much as the increased amount to purchase products within the seller pool, and when the consumer fails in the game, he or she can use the save token provided by the seller to purchase the products.

At this time, the token usage information processing unit 26 divides the challenge token held by the consumer who has acquired the challenge token into a plurality of units, then manages information on the number of the divided units of the challenge token so as to use them in the game, and manages the save tokens acquired from each seller so that the consumer can integrate them at will.

In addition, the token issuance information management unit 20 converts the challenge token held by the consumer into a purchase token when the consumer attempts to purchase a product. Only then, the consumer may freely purchase the products from the seller with the converted save token. Therefore, the purchase token is a token having a cash value.

The reward token management server 10 further includes an allowable save token use value update processing unit 36 configured to cumulatively update the allowable values for use of the save tokens of the seller as much as the amount paid when the seller pays the save token to the consumer who has failed in the game using the challenge token.

At this time, the allowable save token use value update processing unit 36 manages so that a transaction may be made only when a cumulative amount of the allowable values for use of the save tokens of a purchase target seller from which any one consumer wishes to purchase is greater than the amount of the save token to be used by the consumer.

In addition, when the seller requests an increase in the allowable value for use of the save token of the seller when the consumer attempts to purchase a product using the save token to the reward token management server 10 through the allowable save token use value update processing unit 36, the reward token management server 10 increases the allowable value for use of a purchase token, that is, the save token as much as a charging amount of the seller, so that the consumers may freely purchase the products of the sellers using the save tokens held by the consumers.

In addition, the token resource calculation processing unit 34 performs calculation and payment processing of the challenge token issued to the consumer in return for selling the products and the purchase token paid to the consumer when he or she fails in a game challenge using the challenge token.

In addition, the token resource calculation processing unit 34 performs calculation processing so that, when the consumer requests to purchase a product after successfully completing a game challenge using the challenge token, the seller who has issued the challenge token does not issue an additional save token. Since the consumer did not fail the game, the original token issuing seller no longer needs to issue the save token to the consumer.

Further, the token resource calculation processing unit 34 is configured so that the amount of the challenge token paid to the consumer to participate in a game when selling a product, and the amount of the save token that can be received when the consumer fails to increase the token through the bargaining game after the challenge to a specific challenging seller are equally calculated.

In addition, the token resource calculation processing unit 34 may calculate so that the product seller who has issued the challenge token pays both of the amount of the challenge token paid to the user to participate in a game when selling a product, and the amount of the save token that can be received when the consumer fails to increase the token through the game after the challenge to a specific challenging seller.

In addition, the token resource calculation processing unit 34 is configured to calculate so that the product seller and the challenging seller who is the challenge target of the consumer share and pay both of the amount of the challenge token paid to the consumer to participate in a game when selling a product, and the amount of the save token that can be received when the consumer fails to increase the token through the game after the challenge to a specific challenging seller in a predetermined ratio.

In particular, the token resource calculation processing unit 34 processes so as to refund a predetermined ratio of the increased amount of the token to the seller who has issued the challenge token when the consumer succeeds to increase the token through the game.

At this time, if the consumer integrates the challenge tokens received from a plurality of sellers and challenges the game, and when he or she succeeds in the game to increase the token amount, the sellers may receive rewards to issue tokens according to a payment ratio of each seller, which forms the total token integration amount.

For example, when any one consumer receives 200 challenge tokens from a seller A, 300 challenge tokens from a seller B, and 500 challenge tokens from a seller C, and the consumer obtains an amount of 2000 challenge tokens as a result of challenging a game with a total of 1000 challenge tokens, the reward token management server 10 may pay the rewards to issue tokens to each seller by dividing. For example, the increased 1000 challenge tokens may be paid by dividing in a way of paying 200 challenge tokens to the seller A, 300 challenge tokens to the seller B, and 500 challenge tokens to the seller C according to each issuance ratio thereof.

Meanwhile, the above-described bargaining game management unit 18 is configured to calculate information on target products that can be challenged by the bargaining game for each seller, and game probability information computed based on the amount of the challenge token of the consumer compared to the amount of the challenge product, and displays them in a readable state.

In addition, the reward token management server 10 includes a seller information management unit 14 configured to register and manage product information sold by each seller and token information paid to the consumer upon purchase for each product, and sort the products in an order of the largest amount of tokens paid for each product.

In addition, the reward token management server 10 further includes: a consumer information management unit 16 configured to manage consumer personal information; and a consumer game history management unit 22 configured to manage a game challenge history of each consumer.

The inventive system includes a controller 50 for controlling operations of each component or unit through a communication module 12.

Therefore, the game win/loss-linked reward token processing system for buyers according to an embodiment of the present invention allows each seller to issue challenge tokens that enable user to negotiate the product price through the game as a reward for purchasing a product, thereby activating product sales, and the users may purchase products at a lower price by increasing the amount of the challenge token through the game, such that a lot of fun in the game can be obtained in addition to the fun of consumption. In addition, if the user loses in the game, he or she may receive an additional save token of the same amount as the challenge token, and for the sellers who have issued the save tokens, allowable values for use of the save tokens that allow the consumer to use them for purchasing the product of the sellers are displayed separately for each seller, such that the consumer can easily purchase the product of the sellers, and thereby leading the virtuous circulation in a way that token issuance and sales amount are proportional to each other.

Meanwhile, the game win/loss-linked reward token processing system for buyers according to an embodiment of the present invention is not limited to the above-described embodiments, but may be variously modified without departing from the technical gist of the present invention.

### [Description of Reference Numerals]

2: Consumer terminal
4: Reward token information output application
6: Shopping mall server
8: Seller POOL
10: Reward token management server
18: Game management unit
20: Token issuance information management unit
34: Token resource calculation processing unit
36: Allowable save token use value update processing unit

## Claims

1. A system for processing a reward token in conjunction with win/loss of a game for buyers, the system comprising a reward token management server (10) which comprises:
a game management unit (18) configured to manage a plurality of games which allow a consumer to participate in price bargaining of a selling product of a seller, and negotiate the price of the selling product depending on the win/loss of the game;
a token issuance information management unit (20) configured to process so that the seller can issue a token capable of participating in a bargaining game and provide it to a consumer who has purchased a product, and manage information on the issued token; and
a token resource calculation processing unit (34) configured to perform calculation processing so that an amount of financial resource burden by the seller who has issued the token when selling the product varies depending on the win/loss of the game played by the consumer.

2. The system according to claim 1, wherein the reward token management server (10) comprises a token-specific seller linkage information management unit (28) configured to manage history information on the product sales of the seller and token issuance in order to perform information processing due to differences between a time when the seller sales the product, a time when the consumer plays the game, and a time of performing a calculation between the seller and the operator.

3. The system according to claim 1, wherein the token issued by the token issuance information management unit (20) includes: a challenge token which is provided by the seller to the consumer when purchasing a product, and allows the consumer to participation in a game for negotiating the price when purchasing the product later; and
a save token which is assigned to a consumer who fails the game, has the same face value as a face value of the challenge token paid when participating in the game, and allows the consumer to use it only when purchasing a product.

4. The system according to claim 1, wherein the reward token management server (10) comprises a consumer token amount management unit (24) configured to manage an increased amount of the token of the consumer when he or she succeeds in the game using a challenge token, and manage amounts of purchase tokens provided by the seller when the consumer fails in the game by type of the tokens.

5. The system according to claim 1, wherein the reward token management server (10) comprises a token usage information processing unit (26) configured to manage token usage information of the consumer so that when he or she succeeds in the game using a challenge token, the consumer can use the token as much as the increased amount to purchase products within a seller pool, and when the consumer fails in the game, he or she can use the save token provided by the seller to purchase the products,
wherein the token usage information processing unit (26) divides the challenge token held by the consumer who has acquired the challenge token into a plurality of units, then manages information on the number of the divided units of the challenge token so as to use them in the game, and manages the save tokens acquired from each seller so that the consumer can integrate them at will.

6. The system according to claim 1, wherein the token issuance information management unit (20) converts a challenge token held by the consumer into a save token when the consumer attempts to purchase a product.

7. The system according to claim 1, wherein the reward token management server (10) comprises an allowable save token use value update processing unit (36) configured to cumulatively update allowable values for use of the save tokens of the seller as much as the amount paid when the seller pays the save token to the consumer who has failed in the game using a challenge token,
wherein the allowable save token use value update processing unit (36) manages so that a transaction is made only when a cumulative amount of the allowable values for use of the save tokens of a purchase target seller from which any one consumer wishes to purchase is greater than the amount of the save token to be used by the consumer.

8. The system according to claim 1, wherein, if the seller requests an increase in the allowable value for use of the save token of the seller when the consumer attempts to purchase a product using the save token to the reward token management server (10) through the allowable save token use value update processing unit (36), the reward token management server (10) increases the allowable value for use of a purchase token, that is, the save token as much as a charging amount of the seller.

9. The system according to claim 1, wherein the token resource calculation processing unit (34) performs calculation and payment processing of a challenge token issued to the consumer in return for selling the products and the save token paid to the consumer when he or she fails in a game challenge using the challenge token, and
wherein the seller who has issued the challenge token does not issue an additional save token when the consumer requests to purchase a product after successfully completing a game challenge using the challenge token.

10. The system according to claim 1, wherein the token resource calculation processing unit (34) is configured so that an amount of a challenge token paid to the consumer to participate in a game when selling a product, and an amount of the save token that can be received when the consumer fails to increase the token through a bargaining game after the challenge to a specific challenging seller are equally calculated, and
wherein the token resource calculation processing unit (34) calculates so that a product seller who has issued a challenge token pays both of an amount of the challenge token paid to a user to participate in a game when selling a product, and an amount of the save token that can be received when the consumer fails to increase the token through the game after the challenge to a specific challenging seller, and
wherein the token resource calculation processing unit (34) is configured to calculate so that a product seller and a challenging seller who is a challenge target of the consumer share and pay both of an amount of the challenge token paid to the consumer to participate in a game when selling a product, and an amount of the save token that can be received when the consumer fails to increase the token through the game after the challenge to a specific challenging seller in a predetermined ratio, and
wherein the token resource calculation processing unit (34) processes so as to refund a predetermined ratio of the increased amount of the token to the seller who has issued the challenge token when the consumer succeeds to increase the token through the game.

11. The system according to claim 1, wherein the game management unit (18) calculates information on target products that can be challenged by the game for each seller, and game probability information computed based on an amount of a challenge token of the consumer compared to an amount of a challenge product, and displays them in a readable state.

12. The system according to claim 1, wherein the reward token management server (10) comprises a seller information management unit (14) configured to register and manage product information sold by each seller and token information paid to the consumer upon purchase for each product, and sort the products in an order of the largest amount of tokens paid for each product;
a consumer information management unit (16) configured to manage consumer personal information; and
a consumer game history management unit (22) configured to manage a bargaining game challenge history of each consumer.

13. The system according to claim 1, further comprising:
a consumer terminal (2) equipped with a reward information output application (4) which allows the consumer to read information on challenge tokens to be issued upon purchase for each seller registered in the reward token management server (10), information on save tokens to be paid secondarily when the consumer fails to increase the token through the game, and information on accumulated allowable values for use of save tokens of a seller who is a target of bargaining challenge to determine whether a product can be purchased; and
seller terminals S1 to Sn and D1 to Dn configured to issue challenge tokens when the consumer purchases a product in conjunction with the reward token management server (10), and then pay the save token to the consumer when he or she fails in challenge to purchase a specific product; and
a shopping mall server (6) configured to receive a product purchase signal of a specific user from the reward token management server (10), the seller terminals S1 to Sn and D1 to Dn, or the consumer terminal (2) and perform payment processing.

14. The system according to claim 1, wherein tokens (40) include: token face value information (42) which is issued by a seller in return for purchasing a product, or can be used only to purchase a product as much as the face value due to failure of bargaining; and issuer product image information (44),
wherein the issuer product image information (44) is minted as non-fungible tokens (NFTs) along with an issuance time.

15. The system according to claim 1, wherein the reward token management server (10) comprises a token image management unit (30) configured to manage an issuer product (a painting image or a photo image) image information (44) included in the token (40) to remain in the possession of the consumer even if the consumer uses face value information assigned to the token, and a token image data transaction processing unit (32) configured to trade the issuer product image (44), the painting image or the photo image included in the token (40).
